# EUROPEAN PATENT APPLICATION

(11) **EP 4 610 806 A1**
(43) Date of publication of application: **03.09.2025**
(21) Application number: 24201106.2
(22) Date of filing: 18.09.2024
(51) Int. Cl.: G06F 8/10, G06F 8/35

(54) **DEVELOPING AN INFORMATION MODEL FOR AN INDUSTRIAL AUTOMATION DEVICE**

(71) Applicant: Siemens Aktiengesellschaft, 80333 München (DE)
(72) Inventor: Thuluva, Aparna Saisree, 85764 Oberschleissheim (DE); Biehler, Georg, 90453 Nürnberg (DE); Wang, Qi, 430080 Wuhan (CN); Blumenstock, Werner, 91085 Weisendorf (DE); Anicic, Darko, Dr., 81379 München (DE); Kerschbaum, Sven, Dr., 90768 Fürth (DE)
(74) Representative: Siemens Patent Attorneys

(57) **Abstract**

The proposed embodiments relate to an engineering development system for industrial automation devices which uses a large language module to create information models. It obtains sample models, receives natural language prompts to specify requirements, identifies concepts within the sample models that match these requirements, and amends them accordingly. Finally, it integrates the amended concepts to form a comprehensive information model tailored to the specific industrial automation device. The proposed embodiments present a novel, intuitive, and deterministic method for developing industrial information models. By harnessing the intuitive capabilities of generative AI technologies and integrating them with existing deterministic tools, the embodiments ensure both accuracy and reliability. This synergy between LLMs and deterministic tools results in an information modeling process that is both intuitive and precise.

## Description

### Technical Field

The disclosed embodiments pertain to the field of process automation, in particular to the field of process automation in industrial plants. More specifically, the disclosed embodiments relate to a development, composition, debugging, engineering and/or deployment of industrial automation programs such as industrial automation programs being designed to be deployed on a Programmable Logic Controller (PLC) or a Virtual Programmable Logic Controller (vPLC) assigned to one or more industrial automation devices.

### Background Art

A factory shop floor typically comprises various industrial automation and industrial automation machines working together to achieve a common goal, such as manufacturing a product. Each industrial automation machine may consist of multiple industrial automation devices connected to a Programmable Logic Controller or PLC, or a Virtual Programmable Logic Controller or vPLC. Programmable Logic Controllers are utilized to provision an industrial automation program defining the performance of the industrial automation machine or the industrial automation device, both of which are collectively referred to hereinafter, without limitation of generality, as industrial automation devices.

Depending on the type of PLC, traditional automation programming languages such as IEC 61131-3, or higher-level programming languages and frameworks, may be utilized by a process engineer or operational technologies engineer or OT engineer. OT engineers specialize in developing and engineering specific industrial automation programs to meet the requirements and specifications of the assigned industrial automation device and to harmonize the operation of the industrial automation device with other industrial automation devices, thereby integrating their operation into the overall manufacturing process. However, OT engineers are not typically experts in information modeling. Information modeling involves creating and utilizing a structured representation of the data and methods associated with a device or system using semantic descriptions that help standardize how information is interpreted and used across different devices. A prominent example of information modeling in industrial automation is the OPC Unified Architecture (OPC UA) standard providing a contemporary mechanism for industrial communication.

The PLC ultimately exposes a server implemented within the industrial automation device to one or more clients, allowing these clients to connect and interact with the server. For effective interaction, clients usually require a semantically well-described interface of the server in order to readily comprehend the data and methods provided by the industrial automation device. This semantically described and structured interface interfaces is commonly referred to as information model. The information model may be maintained on the industrial automation device and exposed to clients by the aforementioned server of the industrial automation device and/or by the industrial automation program being executed on the Programmable Logic Controller or PLC.

Given the diversity of industrial automation devices on the shop floor, it is desirable for a system integrator to utilize harmonized semantically enriched information models for all machines which may facilitating the use of generic applications. Therefore, it is crucial to provide an information model for a new industrial automation device during its engineering in a »greenfield scenario«, where the OT engineer is required to develop the software of the new industrial automation device from the scratch, along with an automation program and information model yet to be developed. While OT engineers specialize in developing and engineering industrial automation programs, the provision of information models is not typically within their expertise.

The current OPC UA standards are extended by specific information models, known as companion specifications, which are adapted for specialized industrial automation devices or machines while maintaining harmonized interfaces for diverse machines. About 120 companion specifications are currently offered to implement specific machines in various domains, including specific machines such as injection molding machines, weighing Instruments, and computer-aided numerical control systems. Despite these resources, it remains challenging for an OT engineer to implement or adapt an information model for a specific industrial device. This difficulty primarily arises from the fact that the OT engineer - not typically being an expert in information modeling - would require comprehensive knowledge of the complete specifications, which are typically very complex and may be based on several additional specifications. OT engineers also do not receive support for modeling, nor do they receive guidance and best practices to enable them to implement or adapt the semantic information model.

In the course of their routine responsibilities, many OT engineers encounter a complex challenge when tasked with developing an automation program for a greenfield industrial device. Some challenges stem from the absence of pre-existing information models, such as derived from companion specifications, vendor-specific or customer-specific information models, for the greenfield device. Despite this, the information model is expected to be constructed in accordance with existing standardized, harmonized, and vendor-specific information models. For instance, the information model should encompass data structures or automation function templates, which may be employed for function calls in order to implement the automation functions of the industrial device via the Programmable Logic Controller PLC.

Accordingly, there is a need in the art for advancing tools for facilitating a development of automation programs for industrial automation devices while additionally assisting in a generation or amendment of an information model during the development process, aligning said information model with at least one existing information model in order to enhance compatibility.

### Summary of the Invention

According to an embodiment, an engineering development system is provided, the engineering development system being designed for developing an information model for an industrial automation device in a course of developing an automation program for said industrial automation device. The engineering development system comprises a large language module configured to:
- obtain at least one sample information model;
- receive at least one prompt including one or more natural language instructions to specify at least one requirement for modelling the industrial automation device;
- identify at least one concept semantically representing at least one interaction pattern within the sample information model being similar to or capable of fulfilling said requirement and amending the concept identified within the sample information model according to the requirement to form an amended concept adapted to the industrial automation device; and;
- integrate one or more amended concepts to conclude the information model of the industrial automation device.

According to another embodiment, a method for developing an information model for an industrial automation device in a course of developing an automation program for said industrial automation device is disclosed, the method including the steps of:
- obtaining at least one sample information model by a large language module;
- receiving, by the large language model, at least one prompt including one or more natural language instructions to specify at least one requirement for modelling the industrial automation device;
- identifying at least one concept semantically representing at least one interaction pattern within the sample information model being similar to or capable of fulfilling said requirement and amending the concept identified within the sample information model according to the requirement to form an amended concept adapted to the industrial automation device; and;
- integrating one or more amended concepts to conclude the information model of the industrial automation device.

The proposed embodiments go beyond traditional information modeling by simultaneously developing an automation program and an information model for an industrial automation device. This integrated approach bridges the gap between information modeling and software development, significantly reducing the personnel and time required to create information models for greenfield devices. Additionally, it eliminates the necessity for the developing engineer to have specific semantic domain knowledge.

### Brief Description of the Drawing

The objects as well as further advantages of the present invention will become more apparent and readily appreciated from the following description of the preferred embodiments, taken in conjunction with the accompanying drawing accompanying drawing of which:
- FIG. 1: illustrates a schematic diagram of functional units participating in an engineering development process according to an embodiment;
- Fig. 2: illustrates a schematic diagram of functional units participating in an engineering development process according to another embodiment beneficial for a utilization of OPC Unified Architecture,

- Fig. 3: illustrates a schematic diagram of functional units participating in an engineering development process according to the state of the art;
- Fig. 4: illustrates a schematic diagram of functional units participating in an engineering development process according to an embodiment for generating new and/or customized information models; and;
- Fig. 5: illustrates a schematic diagram of functional units participating in an engineering development process according to an embodiment for adding additional requirements to a previously generate skeleton nodeset.

### Description of Examples

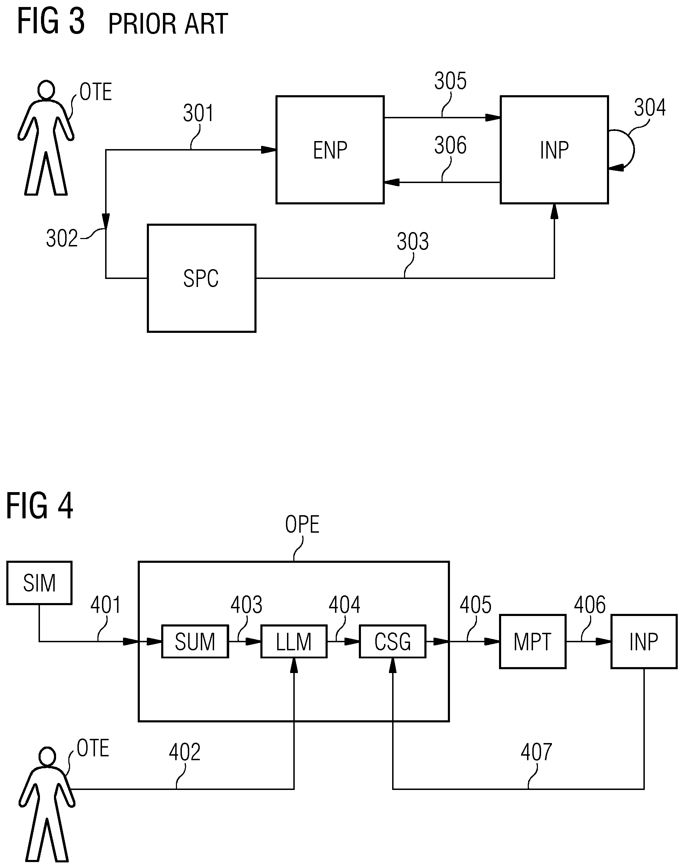

Fig. 3 illustrates a schematic diagram of functional units participating in an engineering development process according to the state of the art. An OT engineer OTE may be in a process of programming data structures and automation functions for a - not shown - industrial automation device using an engineering portal ENP such as a well-known TIA Portal (Totally Integrated Automation Portal), a platform developed by the Applicant offering a complete package of automation solutions in engineering processes and machine manufacturing. The OT engineer OTE may concurrently develop an information model, e.g., OPC UA Robotics and vendor-specific add-ons based on this information model.

In this process, the OT engineer implements a PLC (Programmable Logic Controller) program, or a virtual Programmable Logic Controller (vPLC) program in step 301 using an automation programming language in the engineering portal ENP. In the context of automation programming, IEC 61131-3 may be utilized as an exemplary programming language. IEC 61131-3 is an international standard for programmable logic controller (PLC) programming languages, providing a framework for industrial automation.

In step 302, the OT engineer OTE may need to understand how to model the semantic interface for the industrial automation device in an information modelling platform INP. As a primary contribution towards assisting in a development of an information model during the development process of an automation program, the Applicant of the present proposal has developed an information modelling platform INP entitled SiOME (Siemens OPC UA Modelling Editor) assisting in a design, monitoring, and management of automation processes, making it easier to implement and maintain complex automation systems. This information modelling platform INP includes a component known as Information Model Management. This component may assist in the generation and adaptation of information models in alignment with existing standards and proven information models.

In order to build the model of the semantic interface for the industrial automation device, the OT engineer OTE may, in step 302, have to find and select specifications SPC such as appropriate or at least similar standards or OPC UA companion specifications and, in step 303, import information models from selected specifications SPC into the information modelling platform INP. In order to provide harmonized information models for the industrial automation device, the OT engineer OTE has to identify, read and understand the specifications SCC addressing the specific domain. For example, the OPC Foundation provides 120 companion specifications, each consisting of hundreds of pages, which means that the OT engineer OTE may face a substantial challenge already in comprehensively reviewing these extensive documents.

The information models from selected specifications SPC may provide types. The OT engineer OTE may then, in step 304, build an instance model using said types according to the specifications, and requirements of the automation program to be developed. Finally, in step 305, the OT engineer OTE has to map the PLC tags and/or variables appropriately into the so built information model and, step 306, import the information model as a server interface of the automation program under development assigned to the industrial automation device.

In conclusion, the engineering development process according to the state of the art as shown in FIG. 3 is a highly tedious and error prone process, as the OT engineer OTE may typically be an expert in automation programming but not in information modelling. It may be very difficult for the OT engineer OTE to understand and implement the models correctly. The existing modelling tools are expert tools which cannot be easily used by an OT engineer. Moreover, the OT engineer OTE needs deep know-how about the information models of the standards, deep know-how about information modelling process, etc. Therefore, there is a very clear skill gap that needs to be addressed, as the existing tools available are expert tools and there are no clear or intuitive guidelines for information modelling process.

The inventors of the present embodiments have identified a remarkable opportunity in a »semantification« of OT data, which may be effectively harnessed using generative Al technologies and Large Language Models (LLMs). According to a first alternative, Large Language Models may guide engineers to choose appropriate standards by summarizing and selecting standards for their requirements. In a second alternative, Large Language Models may render the information modelling process interactive and intuitive, providing a natural language interface which may guide engineers through the semantification process. Promising approaches according to the second alternative - constituting at least one embodiment disclosed herein - are described in further detail below.

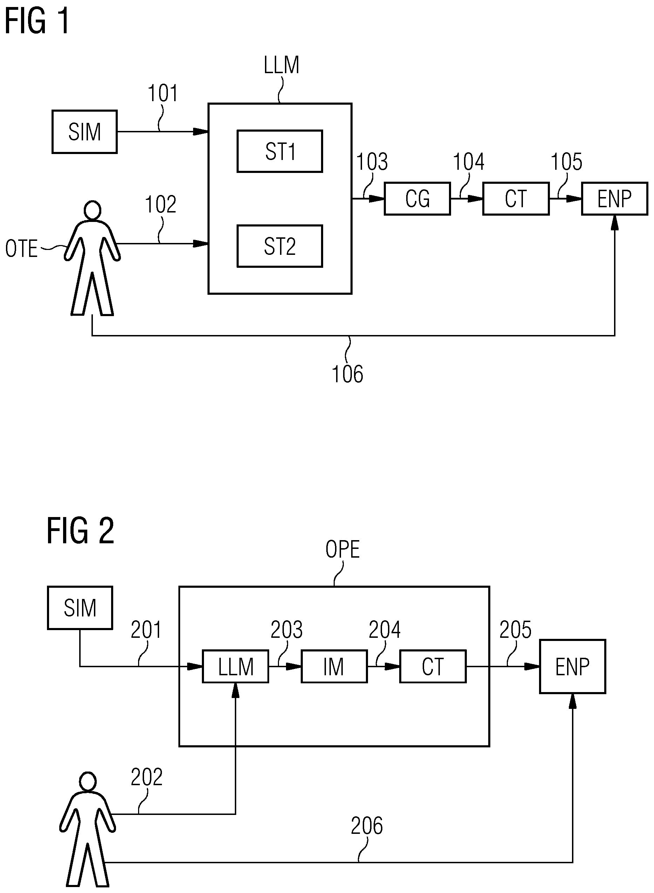

Referring now to FIG 1, which depicts a fundamental method for an intuitive information model development in accordance with an embodiment, an OT engineer (OTE) is alleviated from much of the laborious tasks through the use of an engineering development system as depicted. According to this embodiment, it is proposed to develop information models intuitively using generative AI technologies.

In step 101 at least one sample information model SIM is obtained by the large language module LLM - also referred to as Information Modeling Copilot - or engineering development system. The OT engineer OTE may provide specifications such as appropriate or at least similar standards or OPC UA companion specifications and/or information models from selected specifications SPC. Alternatively, the large language module LLM or any other instance, whether within or outside the engineering development system, may retrieve and utilize these documents and information models. The retrieval may be conducted either with assistance - such as at the discretion of the OT engineer OTE - or autonomously.

In step 102 the OT engineer OTE may specify requirements for the information modelling of the specific or general automation device. the OT engineer OTE may enter at least one prompt including one or more natural language instructions to specify at least one requirement for modelling the industrial automation device or the industrial automation machine.

The large language module LLM may, in a first step ST1, summarize existing standards suitable for modeling the industrial automation device and, in a second step ST2, generate a tailored information model. A tailored information model may be an initial draft which may be refined step by step. Each or both of these steps ST1, ST2 may be executed iteratively or in a step-by-step process, optionally including one or more further prompts or queries from the OT engineer OTE during the process.

In step 103 a tailored information model for the industrial automation device is finalized by the large language module and may be transferred to a code generator CG of the development system. This code generator CG, originally intended for compiling the automation program into an automation programming language representation, may now also be used for compiling the information model into an automation programming language representation in the context of this embodiment.

In step 104 the code generator has delivered a code template CT, which is a compiled representation of the information model or, more specifically, a compiled automation programming language representation of the information model. In step 105 the code template CT may be delivered to an engineering portal ENP such as a well-known TIA Portal or, alternatively, imported by the engineering portal ENP. Step 106 in the drawing illustrates a further benefit: The OT engineer OTE may ultimately implement code and/or the interface of the industrial automation device using one or more code templates CT. The OT engineer OTE may simply instruct by step 106 a deployment or download of the information model and/or the automation program from the engineering portal ENP to a memory containing the executable code of the industrial automation device. The memory containing the executable code of the industrial automation device may reside in Programmable Logic Controller (PLC) or a Virtual Programmable Logic Controller (vPLC) assigned to the industrial automation device.

One significant advantage of this and other embodiments described herein is the streamlined information modeling process for green-field machines. This is particularly beneficial for an OT engineer OTE, such as a machine builder, who may not be an expert in information modeling or industrial standards. Unlike existing tools that necessitate domain expertise for developing information models, the approach described in this embodiment is intuitive. It gathers the engineer's requirements for the information model in natural language and automatically generates a customized information model based on those requirements.

FIG. 2 illustrates an embodiment which may be specifically customized for a usage of the OPC UA standard. An OPC Engine OPE substantially including the large language module LLM and being also referred to as an information modelling copilot, may serve as a generative Artificial Intelligence engine assisting the OT engineer OTE to work with information models and relieving the engineer's burden to entirely understand semantics a of a sample information model as an underlying template for the information model to be developed.

In step 201 at least one sample information model SIM may be obtained by the large language module LLM. This may include well-defined information models SIM such as OPC UA nodeset files, Asset Administration Shell or AAS Submodel Templates, Message Queuing Telemetry Transport or MQTT topic trees etc. being input into the large language module LLM.

The information models SIM may be standardized or vendor specific. Some or all information models SIM may primarily consist of type definitions in which case they may be referred to as type models. Along with providing type models it may be advisable to also provide available sample instance models - e.g., a robot with 3 axes, 2 powertrains etc. - as an input to the large language module LLM. A type model defines the structure, attributes, and behavior of a class of objects in a system. It serves as a blueprint or template from which individual instances are created. In contrast, an instance model represents a specific realization of a type model, containing actual data and state for a particular object.

Type models and/or instance models may be converted to a Resource Description Framework format or RDF, as RDF enables efficient querying of information and efficient extraction of required information. The RDF format is a standard model for data interchange on the web, using triples (subject-predicate-object) to represent information.

Additionally, guidelines to develop a new information model - such as those described in standardization documents - may be provided as input to the large language module LLM. With these inputs, the large language module LLM may learn to assist the OT engineer OTE in developing customized information models according to the engineer's requirements. Initially, the large language module LLM may firstly provide a resume or a summarization of the input contents in natural language to the OT engineer OTE, enabling her or him to understand the existing information models SIM and prompt requirements accordingly.

In step 202 the OT engineer OTE may provide requirements to develop a new information model to the large language module LLM. The requirements may be given intuitively and interactively in natural language. Moreover, it is an interactive approach where the OT engineer OTE may be encouraged to give and refine her or his requirements step-to-step. That is, the OT engineer OTE should first select one of the existing information models suitable for his requirements. In later steps, the OT engineer OTE may specify additional requirements, then the large language module LLM will add them in the generated information model. In this way, the the OT engineer OTE may specify requirements iteratively.

In step 203, the large language module LLM has generated an information model IM or, more specifically, an OPC UA nodeset file, based on the input from step 201 and requirements entered in step 202. The generated information model IM may fulfill the requirement as prompted. As mentioned in step 202, the information model IM may be developed iteratively. Initially, the base skeleton may be selected from existing models, and then additional requirements from the OT engineer OTE may appended step-by-step in an iterative manner. Therefore, building of the information model IM may - as illustrated in Figure 4 - include several steps. Some of these steps are described in the following:
- Firstly, a subset from the existing information model IMs - provided as an input to the large language module LLM - may be extracted. The extracted subset may fit basic requirements of the OT engineer OTE as illustrated in step 404 of Figure 4.
- The extracted subset may serve as a base for the next steps, where additional requirements are appended. Once generated, the subset is in RDF format and may have to be converted into the target format such as an OPC UA XML nodeset file or AASX package format. It may then be validated using validation tools like a SiOME application program interface. If the generated information model IM passes the validation test, further requirements from the OT engineer OTE may be considered. If the generated information model IM does not pass the validation test, validation errors may be sent back to the large language module LLM, which may correct the errors in the generated model.
- For conversion into the target format - e.g., for OPC UA - mapping tools may be utilized for converting knowledge graphs in RDF format into an XML format. Chimera, an opensource framework for the definition of composable semantic data transformation pipelines, may be chosen as a suitable mapping tool.
- Subsequently, additional requirements from the OT engineer OTE are collected. For example, if the OT engineer OTE may wish to add a motor to a robot, she or he may simply prompt a natural language instruction into the large language module LLM such as »add motor to the robot in the generated information model«. Then the large language module LLM adds a motor node under the robot node and presents the result to the OT engineer OTE which is then able to update attributes of the newly generated motor instance if needed. Further on, the OT engineer OTE may add new datapoints to existing nodes such as a speed to the motor. The OT engineer OTE may specify such requirements intuitively, simply by giving an instruction to the large language module LLM in natural language such as »add speed to the motor of the robot«. Then the large language module LLM adds a new datapoint under robot and presents the results to the OT engineer OTE. Based on the requirements of the OT engineer OTE, the large language module LLM may automatically generate and add nodes to the information model IM. The OT engineer OTE may update them if necessary.

In this manner, the information model IM is crafted through ongoing interaction with the OT engineer OTE to gather the engineer's requirements and develop the model iteratively. This iterative approach is crucial for developing information models, as their inherent complexity often leads to errors if not meticulously managed.

One of the major challenges regarding the previously practiced information modelling is a disconnect between the developing of the information model - i.e. the semantic interface of the industrial automation device - and developing of the automation program - i.e. the software of the industrial automation device. Step 204 addresses this issue by generating code templates CT from the generated information model IM to implement the machine interface in a PLC using automation programming languages such as IEC 61131-3 or SCL (Structured Control Language).

Another measure implemented in step 204 - alternatively or additionally implemented in previous and/or later steps - is that the PLC tags and/or variables from the code template CT may be automatically mapped into the generated information model. This automation alleviates the previously existing burden of the OT Engineer to manually map these PLC tags. PLC (Programmable Logic Controller) tags may be understood as names assigned to variables stored in a memory of the Programmable Logic Controller. These tags may help in identifying and managing data within the PLC controlling the industrial automation device. In other words, one or more tags and/or variable being assigned for a data usage by the industrial automation device or by the PLC controlling the industrial automation device may be mapped to at least one concept, preferably to a concept name or a tag name of the information model.

SCL or Structured Control Language is a high-level programming language used primarily for programming PLCs or Programmable Logic Controllers. SCL is based on the PASCAL programming language and is designed to facilitate complex control tasks that are difficult to implement. These programming languages are used to program the functionality and interface of a machine. Consequently, by generating code templates CT for the implementation of methods/operations and data mapping templates from the information model, the OT engineer OTE may easily implement the machine interface.

In step 205 one or more generated code templates CT and, optionally one or more data templates may be imported into an engineering portal ENP such as the well-known TIA Portal. In step 206 the OT engineer OTE may implement the interface for the machine using these templates. After the implementation, she or he may simply download the information model and the PLC code to the PLC. The PLC may then expose its semantic interface in a standardized and uniform way to one or more clients.

FIG 4 illustrates an embodiment for generating new and/or customized information models or, more specifically, nodeset files using one or more existing nodeset files. In step 401 at least one sample information model SIM such as standardized OPC type and instance models may be obtained by the large language module LLM. The OPC Engine OPE substantially including the large language module LLM may generate a summary SUM of the obtained sample information model SIM in order to allow the OT engineer OTE to prompt the specifications in step 402 even more specific.

The specifications may pertain to requirements for a skeleton model resulting in a customized sub-graph of an OPC UA nodeset. In a subsequent step 404, a subset of the information model is extracted, wherein the information model provided as an input to the large language module LLM is extracted utilizing, by the large language module LLM, the specifications of the OT engineer OTE as prompted in step 402. The extracted subset as delivered in step 404 may fit basic requirements of the OT engineer OTE in order to deliver a sub-graph resulting in a customized sub-graph CSG.

In step 405, the sub-graph or lower graph may be fed to a mapping tool MPT in order to be converted into an XML nodeset file of a lower graph, utilizing, for example the aforementioned mapping tool Chimera. In step 406, the nodeset file may then be validated in an information modelling platform INP using, for example, a validation tools like a SiOME application program interface. If the generated information model IM may pass the validation test, further requirements from the OT engineer OTE may be considered. If the nodeset file does not pass the validation test, validation errors may be sent back in step 407 to the large language module OPC Engine OPE or to the large language model LLM, by which errors in the generated model may be corrected in iterative processing steps.

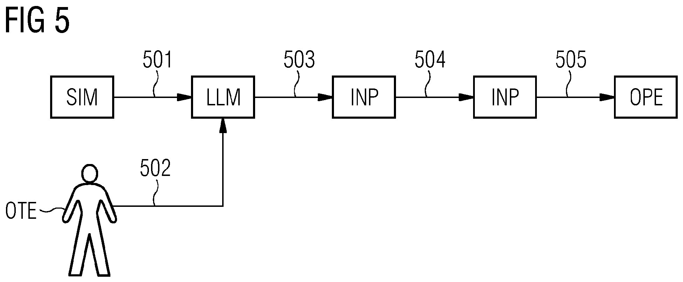

FIG 5 illustrates an embodiment for adding additional requirements from the OT engineer OTE to the previously generate skeleton nodeset. According to the proposed steps in this embodiment, additional requirements from the OT engineer OTE may now be collected and added to a nodeset or to the skeleton nodeset. For example, if the OT engineer OTE may wish to add a motor to a robot, she or he may prompt in step 502 a natural language instruction into the large language module LLM such as »add motor to the robot in the generated information model«. In step 503 the large language module LLM transfers the enlarged structural requirement to the information modelling platform INP which accordingly updates the nodeset to add a motor node under the robot node in the graph or nodeset. In step 504 the enlarged nodeset may be fed into a validate scheme of the information modelling platform INP in order to validate the enlarged nodeset. If the nodeset does not pass the validation test, validation errors may be sent in step 505 to the OPC Engine OPE, by which errors in the generated model may be corrected in further iterative processing steps.

Given the inherent complexity of information modeling, relying solely on large language models (LLMs) may be insufficient due to their lack of determinism and frequent inaccuracies. Similarly, existing information modeling tools may demand significant expertise, making neither approach adequate on its own. The proposed embodiments therefore present a novel, intuitive, and deterministic method for developing industrial information models. By harnessing the intuitive capabilities of generative AI technologies and integrating them with existing deterministic tools, the embodiments ensure both accuracy and reliability. This synergy between LLMs and deterministic tools results in an information modeling process that is both intuitive and precise.

The proposed embodiments extend beyond information modeling to include the generation of code and data templates for automation program development, bridging the gap between information modeling and software development. This approach significantly reduces the time and effort engineers need to create information models, thereby accelerating machine integration and advancing the vision of Industry 4.0.

It is to be understood that the elements and features recited in the appended claims may be combined in different ways to produce new claims that likewise fall within the scope of the present invention. Thus, whereas the dependent claims appended below depend on only a single independent or dependent claim, it is to be understood that these dependent claims can, alternatively, be made to depend in the alternative from any preceding or following claim, whether independent or dependent, and that such new combinations are to be understood as forming a part of the present specification.

While the present invention has been described above by reference to various embodiments, it should be understood that many changes and modifications can be made to the described embodiments. It is therefore intended that the foregoing description be regarded as illustrative rather than limiting, and that it be understood that all equivalents and/or combinations of embodiments are intended to be included in this description.

## Claims

1. An engineering development system for developing an information model for an industrial automation device in a course of developing an automation program for said industrial automation device, the engineering development system comprising a large language module configured to
- obtain at least one sample information model;
- receive at least one prompt including one or more natural language instructions to specify at least one requirement for modelling the industrial automation device;
- identify at least one concept semantically representing at least one interaction pattern within the sample information model being similar to or capable of fulfilling said requirement and amending the concept identified within the sample information model according to the requirement to form an amended concept adapted to the industrial automation device; and;
- integrate one or more amended concepts to conclude the information model of the industrial automation device.

2. The engineering development system according to claim 1, including a code generator for compiling the automation program into an automation programming language representation, the code generator further used for compiling the information model into an automation programming language representation.

3. The engineering development system according to the aforementioned claim 2, including an interface for transferring the automation programming language representation of the information model to an engineering portal.

4. A method for developing an information model for an industrial automation device in a course of developing an automation program for said industrial automation device, the method including the steps of:
- obtaining at least one sample information model by a large language module;
- receiving, by the large language model, at least one prompt including one or more natural language instructions to specify at least one requirement for modelling the industrial automation device;
- identifying at least one concept semantically representing at least one interaction pattern within the sample information model being similar to or capable of fulfilling said requirement and amending the concept identified within the sample information model according to the requirement to form an amended concept adapted to the industrial automation device; and;
- integrating one or more amended concepts to conclude the information model of the industrial automation device.

5. The method according to claim 4, wherein obtaining at least one sample information model includes obtaining specifications such as appropriate or at least similar standards, companion specifications and/or information models from selected specifications.

6. The method according to claims 4 and 5, including the step of converting the information model into an automation programming language representation of the information model.

7. The method according to one of the aforementioned claims 4 until 6, wherein at least one of a tag and a variable being assigned for a data usage by the industrial automation device is mapped to at least one concept, preferably to a concept name or a tag name of the information model.

8. The method according to one of the aforementioned claims 4 until 7, wherein prompts are iteratively received to iteratively amend an information model.
